(19) Europäisches Patentamt

European Patent Office

Office européen des brevets

(11) **EP 1 367 793 A1**

(12) **EUROPEAN PATENT APPLICATION**

(43) Date of publication:
**03.12.2003 Bulletin 2003/49**

(51) Int Cl.7: **H04L 27/26**, H04L 7/04, H04M 11/06

(21) Application number: **03012541.3**

(22) Date of filing: **02.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.05.2002 JP 2002160497**

(71) Applicant: **Panasonic Communications Co., Ltd.**
**Fukuoka-shi, Fukuoka 812-8531 (JP)**

(72) Inventors:
• **Noma, Nobuhiko**
**Yokohama-shi, Kanagawa 227-0033 (JP)**
• **Tomita, Keiichi**
**Yokohama-shi, Kanagawa 222-0032 (JP)**

(74) Representative: **Grünecker, Kinkeldey,**
**Stockmair & Schwanhäusser Anwaltssozietät**
**Maximilianstrasse 58**
**80538 München (DE)**

(54) **Symbol synchronisation in ADSL by detecting FEXT/NEXT boundaries during C-PILOT**

(57)     An ADSL communication apparatus includes a transceiver that executes an initialization sequence, a host that is connected to a user terminal, an AFE unit, a driver that transmits an analog signal (converted by the AFE unit) to a line, and a receiver that receives the analog signal from the line. The transceiver retrieves a signal component of a known carrier from the front-end of a hyperframe, based on an arbitrary symbol breakpoint. By calculating outer product values between the previously retrieved signal component and the currently retrieved signal component, the symbol breakpoint is adjusted in accordance with the patterns of the outer product values.

Fig.7

**Description**

BACKGROUND OF THE INVENTION

1. Field of the Invention

The present invention relates to an ADSL modem apparatus, ADSL communication apparatus, and synchronization adjustment method for ADSL communication that are appropriate for establishing a symbol synchronization at a remote side, in a communication environment where the TCM-ISDN is also used.

2. Description of Related Art

The ADSL (Asymmetric Digital Subscriber Line) is a service that employs an existing telephone line so that both a high speed Internet connection service and ordinary telephone service can use the same line, which has rapidly become available in the recent years. For providing such ADSL services, ITU-T recommendations have been issued regarding ADSL modems. G.lite and G.dmt recommendations established in 1999 at ITU-T SG15 are ADSL standard recommendations, which further extend to ANNEX.A, ANNEX.B, ANNEX. C, and etc., for initialization establishing methods according to the communication environment of individual country (or region).

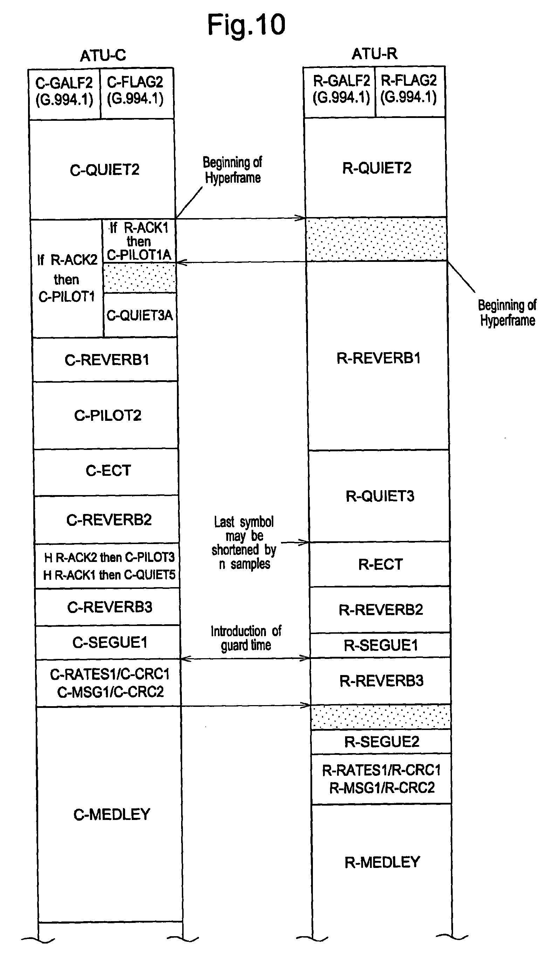

Fig. 10 illustrates an initialization sequence according to G.lite or G.dmt. In Fig. 10, ATU-C is an exchange side apparatus and ATU-R is a terminal apparatus remotely equipped (e.g., at home).

During the initialization sequence, immediately after C-QUIET2 and R-QUIET2, the ATU-C starts a hyperframe transmission from "Beginning of Hyperframe". When the ATU-C transmits C-REVERB1 and C-REVERB2, the ATU-R establishes symbol synchronization for the reception symbol at location "Last symbol may be shortened by n samples". The symbol synchronization is performed by forcefully shortening the symbol by n samples, which correspond to a deviation of the symbol synchronization.

As described above, the symbol synchronization of the ATU-R employs C-REVERB1, C-REVERB2, or C-REVERB3 signal received from the ATU-C. This is due to the fact that a REVERB signal includes carriers ranging #32 - #127, or #32 - #255, and the recommendation clearly states what kind of signal is being sent from the ATU-C, which is useful for establishing a synchronization.

Hereafter, the symbol synchronization method at the ATU-R is illustrated. When the IFFT input signal of C-REVERB at the transmission side (data before calculation, although the transmission side performs the inverse fast Fourier transform on a bit stream that configures a symbol) is X(f), and the FFT input signal of the received signal without the symbol synchronization at the reception side (signal before calculation, although the reception side performs the fast Fourier transform) is Y(f), the following calculation at the reception side can be provided:

$$Z(f) = Y(f) / X(f)$$

When impulse response is res (t), the following calculation is provided:

$$res (t) = inversFFT (Z(f))$$

The above formula calculates the impulse response (res (t)) on the line.

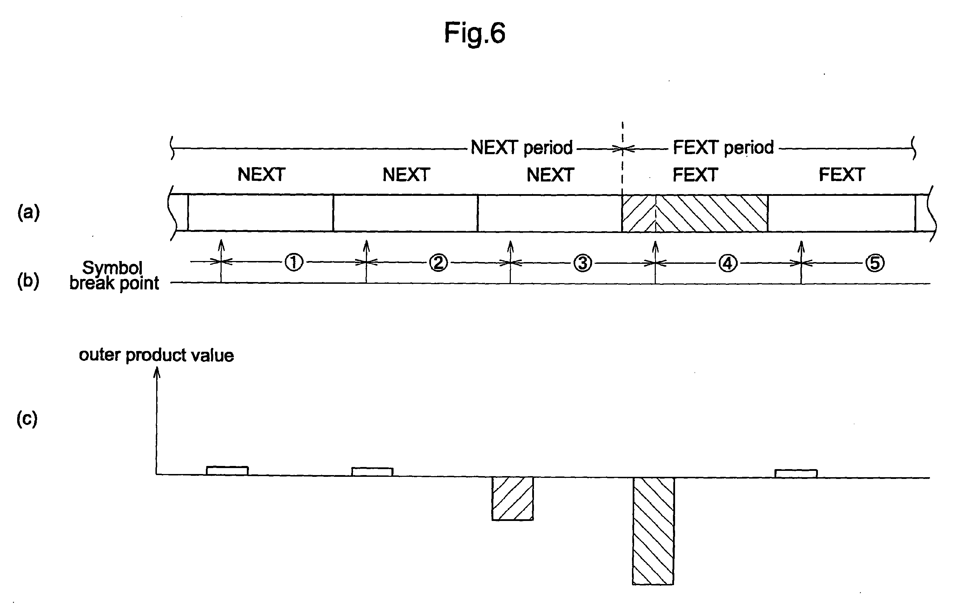

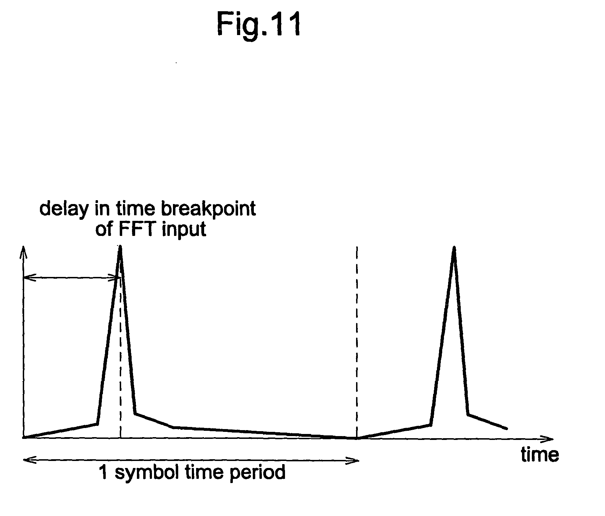

Fig. 11 illustrates a waveform of the impulse response calculated at the reception side. The reception side locates a peak of the impulse response as illustrated in Fig. 6, and detects the beginning of the C-REVERB symbol. The above-described symbol matching method is an example that can be applied to ANNEX.A specification, which is primarily intended for use in the United States.

However, in case of ANNEX.C specification (primarily intended for use in Japan), a special method is applied because of a consideration to a communication environment where the TCM-ISDN is co-resident. In particular, the TCM-ISDN produces a high frequency noise (ISDN noise) caused from switching operations of time division multiplexing for the transmission and reception sides. In order to reduce the adverse effect of the ISDN noise, the synchronization (i.e., hyperframe) is established per 345 symbol unit in the middle of the initialization sequence. During the hyperframe, FEXT symbols are allocated during a period in which the effect of the ISDN noise is small, while NEXT symbols are allocated during a period in which the effect of the ISDN noise is large.

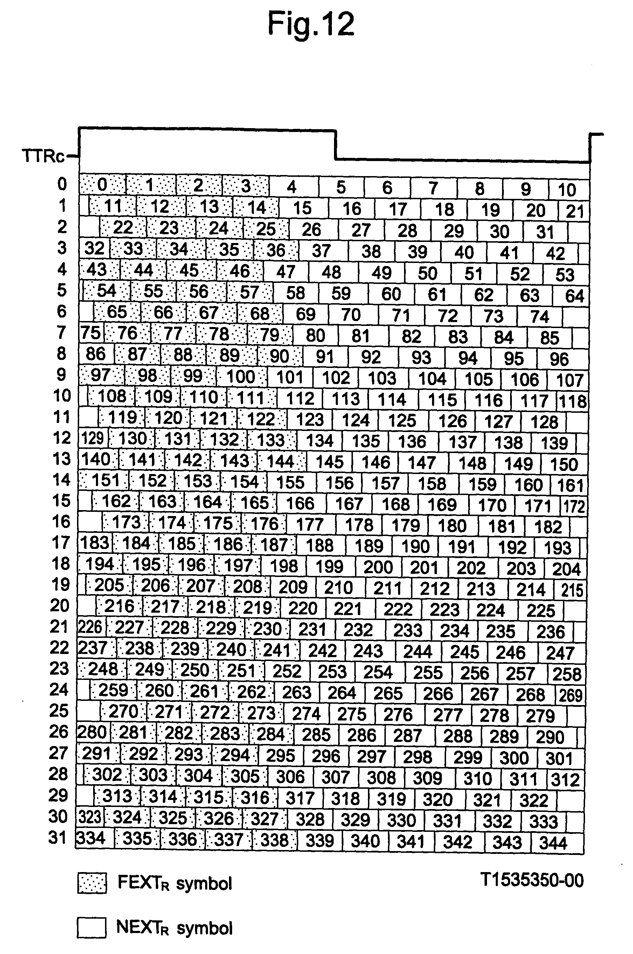

Fig. 12 illustrates a hyperframe that shows a layout of FEXT and NEXT symbols. The ATU-C side receives a 400 Hz TTR clock from the exchange network. By synchronizing according to the TTR clock, FEXT and NEXT periods are distinguished for the layout as shown in Fig. 12.

The ATU-R side is not able to receive the TTR clock from the exchange network, the ATU-R should synchronize with the TTR clock and distinguish the FEXT and NEXT periods in order to perform appropriate communication.

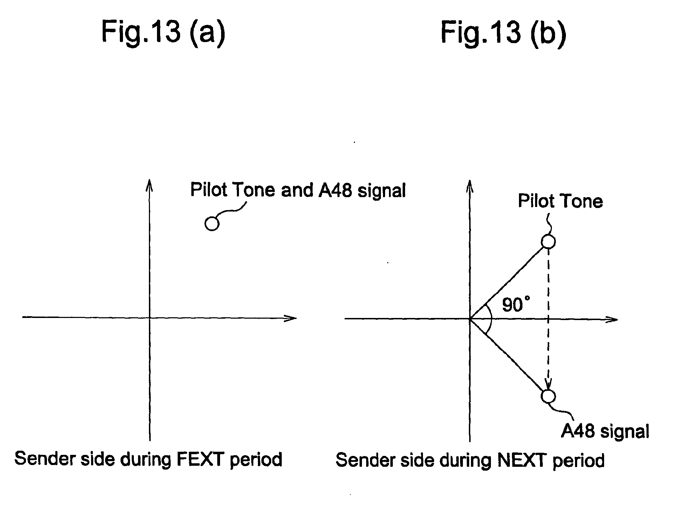

ANNEX.C analyzes C-PILOT1 or C-PILOT1A transmitted from the ATU-C, in order to detect the FEXT and NEXT symbols. In particular, as illustrated in Fig. 13, a PILOT signal, which is a composite of a pilot tone (carrier #64) and carrier #48 (hereafter referred to as A48 signal), is generated. During the FEXT period, a PILOT signal, which is a composite of the pilot tone and A48 signal with the same topology, is transmitted (Fig. 13 (a)), whereas, during the NEXT period, the pilot tone and an A48 signal with a topology shifted at 90 degrees from the pilot tone are separately transmitted as PILOT signals (Fig. 13 (b)).

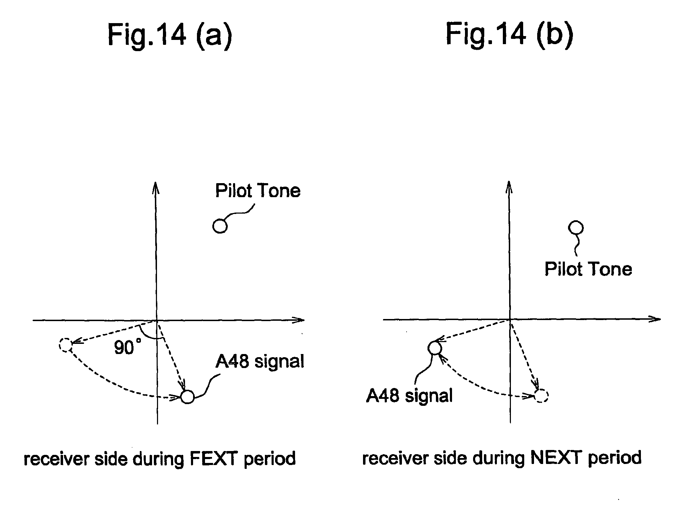

The ATU-R receives the A48 signal at a location illustrated in Fig. 14 (a) during the FEXT period, while receiving the A48 signal at a location illustrated in Fig. 14 (b) when the period switches to the NEXT period. Specifically, when there is a transition from the FEXT to the NEXT period, the location of the A48 signal moves at 90 degrees toward the negative direction as shown in the arrow in Fig. 14 (b). Also, when there is a transition from the NEXT to the FEXT period, the A48 signal reception moves from the location of Fig. 14 (b) to that of Fig. 14 (a). In other words, when there is a transition from the NEXT to the FEXT period, the location of the A48 signal moves at 90 degrees toward the positive direction and repositioned at the original location as shown in the arrow in Fig. 14 (a).

Therefore, the ATU-R can be notified when there is a transition from the FEXT to the NEXT period, and the NEXT to the FEXT period, by finding the time when the A48 signal reception point moves 90 degrees toward the negative direction, and the positive direction respectively. Taking the hyperframe of Fig. 12 for example, when 5 consecutive NEXT symbols are received and there is a transition to the FEXT period, it is possible to recognize that the hyperframe is at the 13th or the 22nd phase. Then, by counting the subsequent reception symbols, it is possible to find the beginning of the hyperframe.

Further, the ATU-R performs the above process for establishing hyperframe synchronization immediately after the ATU-C initiates the transmission of a hyperframe from "Beginning of Hyperframe". Symbol synchronization is established after the ATU-C starts transmitting a C-REVERB signal.

However, when the reception symbol breakpoint is reset after establishing the synchronization of the hyperframe having 345 symbol length, the reception symbol breakpoint needs to be moved within the range of $\pm$ 180 degrees, which sometimes loses the once confirmed hyperframe breakpoint. In this case, the reception of signals from C-RATE1 and R-RATE1 becomes incomplete for both G.lite and G.dmt, thereby causing an irregular shutdown of the process without completing a normal transmission.

SUMMARY OF THE INVENTION

The present invention addresses the above-described problem. The purpose of the invention is to provide an ADSL modem apparatus, ADSL communication apparatus, and synchronization adjustment method for ADSL communication that prevent an abnormal shutdown of the system caused from losing the hyperframe breakpoint, by establishing reception symbol synchronization upon receiving a C-PILOT signal without waiting for a C-REVERB signal.

According to the ADSL modem apparatus/ADSL communication apparatus/synchronization adjustment method of this invention, a signal composition of a known carrier is retrieved based on an arbitrary symbol breakpoint, since the initiation of a hyperframe. Then, an outer product between the previously retrieved signal composition and the presently retrieved signal composition is calculated one by one. Lastly, the symbol breakpoint is adjusted according to the pattern of the outer product values.

This invention relates to a data transmission terminal having the above-described ADSL modem apparatus/ADSL communication apparatus.

BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:

Fig. 1 illustrates a configuration of a communication system at an ATU-R side according to a first and second embodiment of the present invention;
Fig. 2 is a functional block diagram of a transceiver of Fig. 1;
Fig. 3 (a) illustrates a symbol pattern when there is a transition from a FEXT period to a NEXT period;
Fig. 3 (b) is a timing chart of symbol breakpoints that are accurately synchronized;
Fig. 3 (c) illustrates outer product values;
Fig. 4 (a) illustrates a symbol pattern when there is a transition from a FEXT period to a NEXT period;
Fig. 4 (b) is a timing chart of symbol breakpoints having breakpoint shifts;
Fig. 4 (c) illustrates outer product values;
Fig. 5 (a) illustrates a change in topology of a reception symbol when there is a transition from a FEXT symbol to a NEXT symbol;
Fig. 5 (b) illustrates a change in topology of a reception symbol when there is a transition from a NEXT symbol to a FEXT symbol;
Fig. 6 (a) illustrates a symbol pattern when there is a transition from a NEXT period to a FEXT period;
Fig. 6 (b) is a timing chart of symbol breakpoints having breakpoint shifts;
Fig. 6 (c) illustrates outer product values;
Fig. 7 is a flowchart for establishing symbol synchronization according to the first embodiment of the present invention;
Fig. 8 is a flowchart for establishing symbol synchronization according to the second embodiment of the present invention;
Fig. 9 is a conceptual illustration of a table having 16 divisions generated according to the second embodiment of the present invention;

Fig. 10 illustrates a first half of an initialization sequence;

Fig. 11 illustrates a method for establishing symbol synchronization suitable for ANNEX.A;

Fig. 12 illustrates a layout of FEXT and NEXT symbols for one hyperframe;

Fig. 13 (a) illustrates a transmission point of an A48 signal during a FEXT period;

Fig. 13 (b) illustrates a transmission point of an A48 signal during a NEXT period;

Fig. 14 (a) illustrates a reception point of an A48 signal during a FEXT period; and

Fig. 14 (b) illustrates a reception point of an A48 signal during a NEXT period.

DETAILED DESCRIPTION OF PREFERRED EMBODIMENTS

The embodiments of the present invention are explained in the following, in reference to the above-described drawings.

First Embodiment

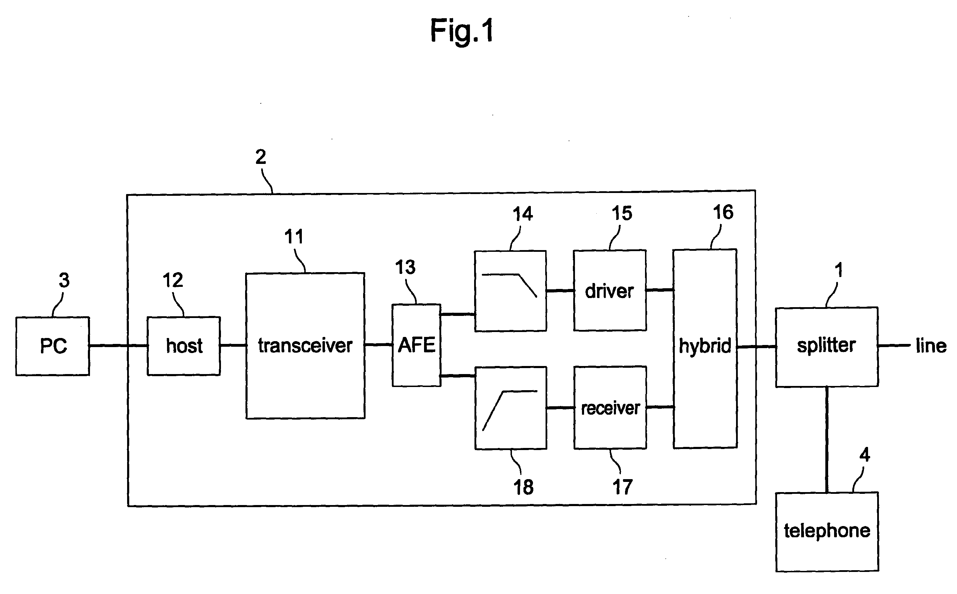

Fig. 1 illustrates a diagram of a communication system at the ATU-R side according to the present invention. In the communication system as illustrated in Fig. 1, a public phone line or a similar phone line (hereafter referred to as line) is connected to ADSL communication apparatus 2 via splitter 1. Further, user terminal 3 is connected to ADSL communication apparatus 2. When user terminal 3 and telephone 4 share one line, splitter 1 is necessary. However, when telephone 4 is not used, splitter 1 is not needed. It is also possible to have a configuration where user terminal 3 internally installs ADSL communication apparatus 2.

ADSL communication apparatus 2 includes transceiver 11 that executes an initialization sequence (which will be later-described), and host 12 that controls the entire operation including the one of transceiver 11. At the line side of transceiver 11, units are configured with an analog circuit via an analog front end (hereafter referred to as AFE). Driver 15 is connected to a DA converter of AFE 13 via analog filter 14, so that analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

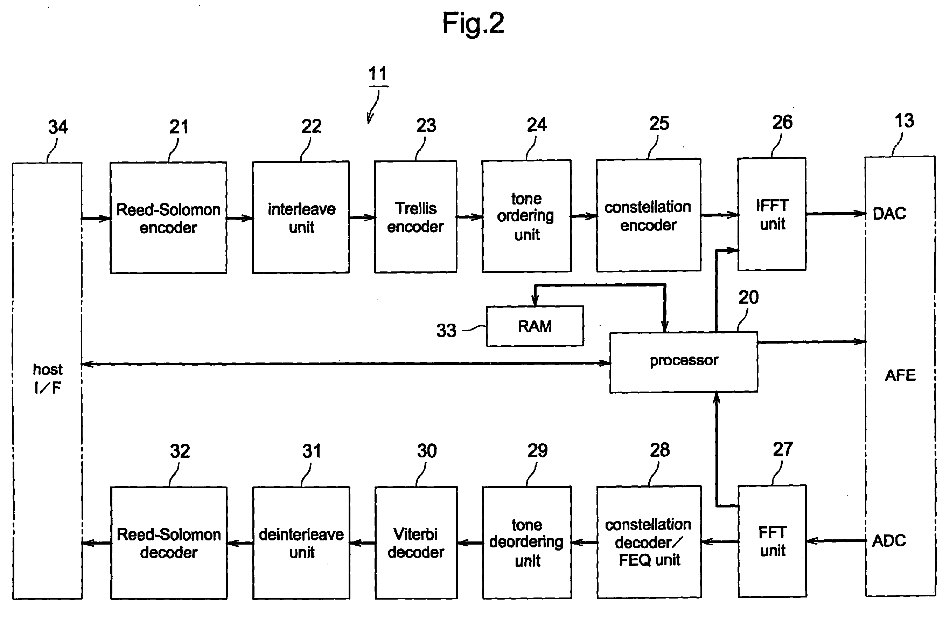

Fig. 2 is a functional block diagram illustrating transceiver 11. Processor 20 has a function to execute the handshake step and initialization step prior to initiating data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, Trellis encoder 23 that performs data convolution from a Trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data laid out to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. Transceiver 11 is connected to host 12 via host interface (I/F) 34.

Hereafter, a detail illustration is provided for the operation of the first embodiment having the above configuration. When the power is turned on at ADSL communication apparatus 2, the ATU-C and ATU-R executes a handshake step. After a quiet period (QUIET2) for a predetermined number of symbol length, the ATU-C initiates a transmission of C-PILOT1. ADSL communication apparatus 2 (ATU-R) simultaneously establishes synchronization of a hyperframe and reception symbols, while C-PILOT1 is being transmitted.

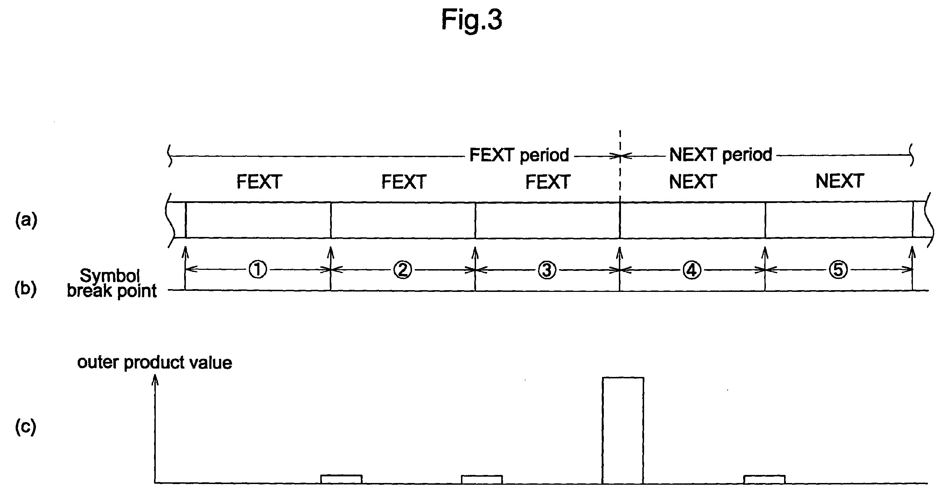

The following illustrates a principle of obtaining symbol synchronization. Fig. 3 (a) illustrates a part of a hyperframe phase (from Fig. 12) of an A48 signal where there is a transition from a FEXT period to a NEXT period. As illustrated in Fig. 3 (b), when a symbol breakpoint (symbol synchronization) recognized by the reception side matches with the transmitted symbol breakpoint, an outer product value between the last symbol of the FEXT period and the first symbol of the NEXT period becomes greater than a predetermined value as illustrated in Fig. 3 (c). This is because the topology of the last symbol in the FEXT period and that of the first symbol in the NEXT period are 90 degrees apart as illustrated in Fig. 14. The outer product can be calculated as follows: When the previous symbol of the A48 signal is at (X1, Y1), and the current symbol of the A48 signal is at (X2, Y2), outer product value = = X1 * Y2 - X2 * Y1. Thus, the outer product value depends on the topology change between symbols.

On the other hand, an outer product value between adjacent two symbols within the FEXT period, as shown in Fig. 3 (a), becomes 0 because of no topology change. As shown in Fig. 3 (c), the outer product value is close to 0, ignoring the topology changes due to factors such as noise. Similar effects can be seen for adjacent two symbols within the NEXT period.

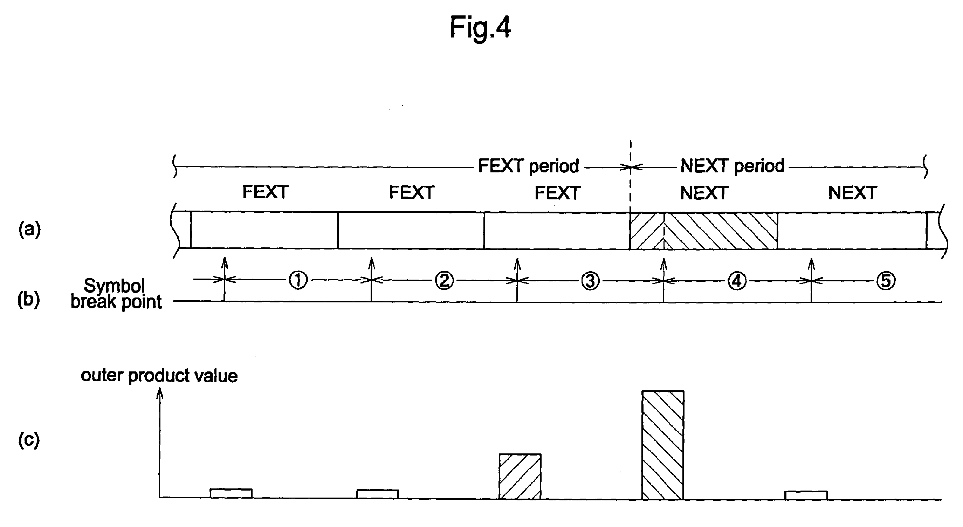

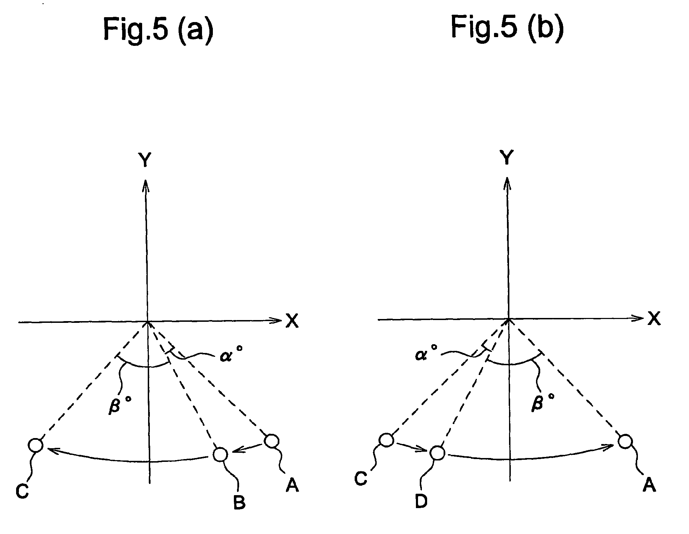

However, when symbol breakpoints are shifted from real symbols as illustrated in Figs. 4 (a) and (b), the calculated outer product values of two consecutive symbols near the breakpoint between the FEXT and NEXT periods become greater than a predetermined value. For example, when calculating an outer product between periods (2) and (3) of Fig. 4 (b), period (3) includes component of a NEXT symbol to the extent that the symbol breakpoint is shifted from the real symbol front-end. Accordingly, an FFT output having period (2) as one symbol appears at location A in Fig. 5 (a), while an FFT output having period (3) as one symbol appears at location B, a topology of which being a (a<90) degrees shifted in the negative direction from location A. Since a is smaller than 90 degrees, the calculated outer product value becomes smaller than that of topology having moved 90 degrees.

Further, when outer products of periods (3) and (4) are calculated in Fig. 4 (b), period (3) has a partial NEXT symbol component to the extent that the symbol breakpoint is shifted from the real symbol front-end, while period (4) only has a NEXT period component. Accordingly, the FFT output having period (3) as one symbol appears at location B, while the FFT output having period (4) as one symbol appears at location D, at topology of which being β (β + a = 90) degrees shifted in the negative direction from location B. Since β is smaller than 90 degrees, the calculated outer product value becomes smaller than that of topology having moved 90 degrees. a depends on the extent to which the NEXT component is included in period (3). The example in Fig. 4 shows a situation where the NEXT component is smaller than the FEXT component in period (3).

Fig. 6 illustrates a relationship between symbol breakpoints and outer product values, when there is a transition from the NEXT to FEXT period. As shown in Fig. 5 (b), a topology moves in the positive direction when there is a transition from a NEXT to FEXT symbol. Therefore, outer product values have the opposite polarity of when there is a transition from a FEXT to NEXT symbol. During a transition from a NEXT to FEXT period as in Fig. 6, when a symbol breakpoint is shifted from a real symbol, only two outer product values appear, which are greater than a predetermined value appear.

When the symbol breakpoints are not accurately established, outer product values (absolute values) appear as follows:

0 0 0 0 small large 0 0 0 0 0 0 small large 0

or,

0 0 0 0 large small 0 0 0 0 0 0 large small 0

Based on the above outer product values patterns, the present embodiment establishes symbol synchronization.

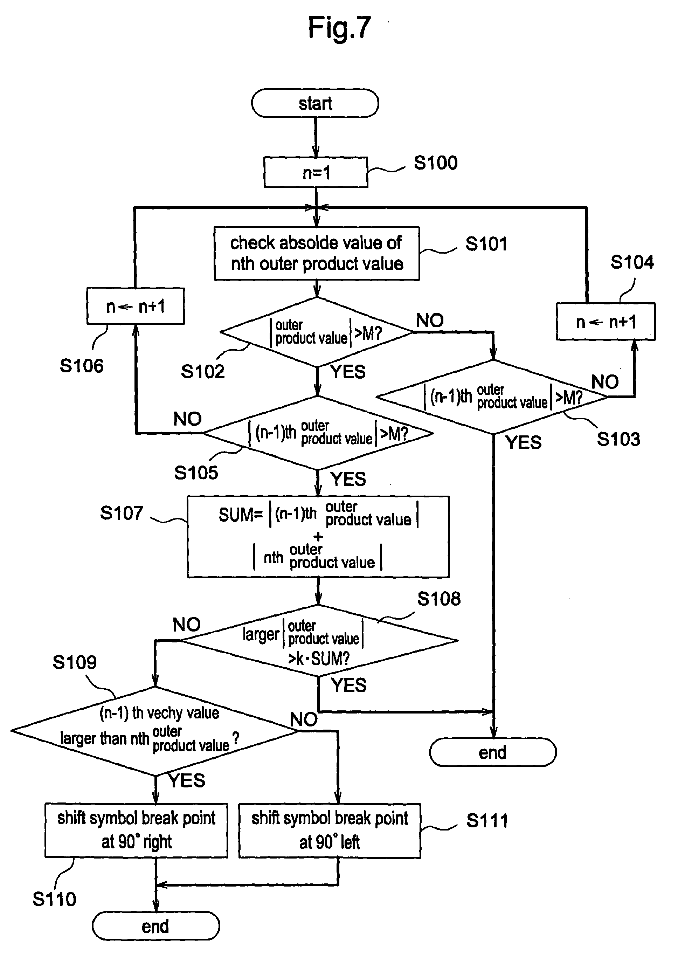

Fig. 7 is a flowchart illustrating steps to find an accurate symbol breakpoint from outer product values of two consecutive symbols. FFT unit 27 of Fig. 2 inputs a calculated signal from an FFT calculation into processor 20. When processor 20 determines an arbitrary symbol breakpoint, two consecutive symbols are selected to calculate the outer product values according to the breakpoint. Then, the values are individually buffered in RAM 33.

When the outer product values are stored, processor 20 sets object number n = 1 (step S100) and calculates the $n^{th}$ outer product value (absolute value) (step S101). Then, it is checked whether the outer product value is greater than threshold value M (step S102). Because of topology changes caused by various communication environments and noises, threshold value M is used to ignore minimum outer product values from this determination procedure. When the current outer product value is smaller than threshold value M, the previous outer product value is compared with threshold value M (step S103).

When only one large outer product value is calculated and nearby outer product values are 0, it signifies that the arbitrarily set symbol breakpoint matches the actual symbol by coincidence. Therefore, in this situation, the process is completed. In addition, when both previous and current outer product values are smaller than threshold value M, the object number is incremented by one (step S104).

When the current ($n^{th}$) outer product value is greater than threshold value M, it is checked whether the previous (($n-1)^{th}$) outer product value also exceeds threshold value M (step S105). When two consecutive outer product values are greater than threshold value M, it signifies a transition is made from FEXT to NEXT period, or from NEXT to FEXT period. When the previous (($n-1)^{th}$) outer product value is smaller than threshold value M, the object number n is incremented by one (step S106).

When the outer product values of two consecutive symbols exceed threshold value M (at step S105), the following calculation is provided in order to check the reliability of the outer product values. First, $(n-1)^{th}$ and $n^{th}$ outer product values are added (step S107). Then, it is checked whether the larger outer product value is greater than the added value multiplied by coefficient k (step S108). In this example, coefficient k is set at 3/4.

Accordingly, it is possible to compare the values of the $(n-1)^{th}$ and $n^{th}$ outer products. When one outer product value is much smaller than the other outer product value, it is determined that the symbol breakpoints are in an allowable range. Therefore, the process is completed.

When the larger outer product value is smaller than "added value multiplied by k" at step S108, it is determined whether the $(n-1)^{th}$ outer product value is larger than the $n^{th}$ outer product value (step S109). When the $(n-1)^{th}$ outer product value is larger than $n^{th}$ outer product value, the symbol breakpoint is shifted at 90 degrees to the right (setting the sampling clock forward) (step S110). and when the (n-1)th outer product value is smaller than nth outer product value, the symbol breakpoint is shifted at 90 degrees to the left (stopping the sampling clock) (step S111).

Using the example of Fig. 4 (c) and Fig. 6 (c), since the order of the outer product values are small-and-large, the symbol breakpoint needs to be shifted at 90 degrees to the left. When one symbol corresponds to 256 sampling clocks, the symbol breakpoint is shifted to the left by 256 * (3/4) clock.

With the above-described procedure, outer product values between symbols are calculated. When two consecutive outer product values exceeding threshold value M are found, moving direction of the symbol breakpoint is determined based on the order and sizes of the values. Therefore, it is possible to establish symbol synchronization without using a C-REVERB signal. Further, since there is no need to wait for the C-REVERB signal, it is possible to establish symbol synchronization during a period in which the hyperframe synchronization is established.

Second Embodiment

Hereafter, the second embodiment of the present invention is illustrated. According to the first embodiment, the accuracy of the symbol synchronization adjustment is only at $\pm$ 256 / 4 = 64 samples, when 1 symbol = 256 samples. Therefore, the following control is provided in order to improve the accuracy of the adjustment.

Since the configuration of the hardware is the same as in the first embodiment, only the operation for establishing symbol synchronization is illustrated in detail.

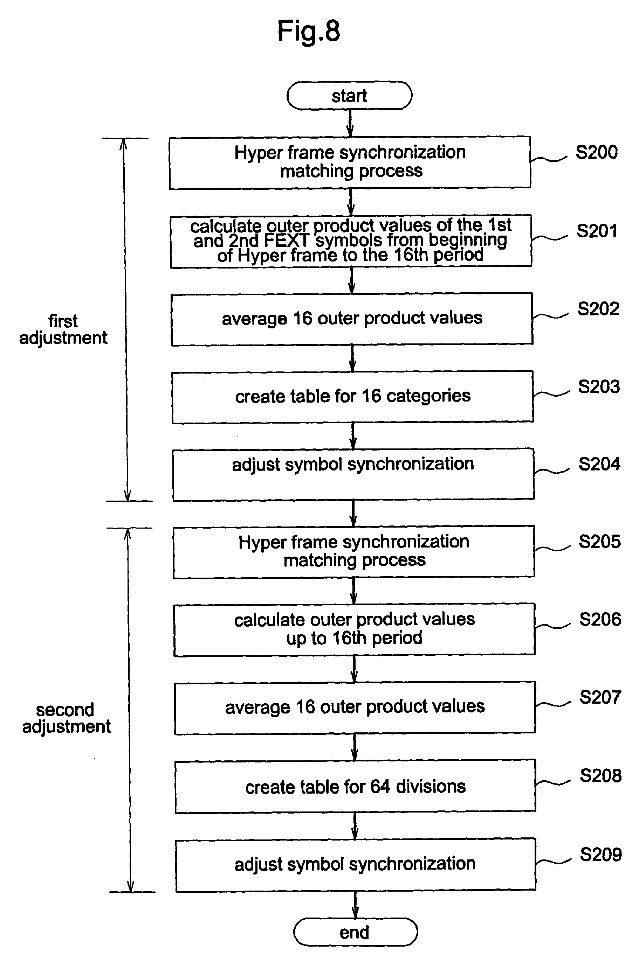

Fig. 8 is a flowchart illustrating steps for symbol synchronization adjustment. As illustrated in Fig. 8, the adjustment procedure has two steps: the first and the second adjustments.

First, during the first adjustment, at "Beginning of Hyper frame" of the initialization sequence, the ATR-R receives a C-PILOT signal transmitted from the ATU-C. Then, FFT unit 27 performs a fast Fourier transform on the signal.

Processor 20 uses the FFT output of A48 signal and calculates outer product values of the two consecutive symbols, employing an arbitrary symbol breakpoint. The outer product values are buffered in RAM 33 in the order of time.

Then, the hyperframe synchronization is adjusted at step S200 of Fig. 8. An arbitrary method can be employed for the hyperframe synchronization, which is based on the C-PILOT signal. For example, from the locations where a negative outer product value appears and where a positive outer product value appears, the transition from a NEXT to FEXT period, or from a FEXT to NEXT period can be found respectively. Further, by counting a number of symbols included in each NEXT and FEXT periods, the front-end of the hyperframe is found. Also, the location of the symbol breakpoint is adjusted as FEXT/NEXT synchronization is obtained between symbols #0 - #344 (one hyperframe).

As shown in Fig. 12, one hyperframe has 32 transitions from a FEXT period to NEXT period, and 32 transitions from a NEXT period to FEXT period. Under an assumption that the symbol breakpoints are shifted, as shown in Fig. 6, two consecutive outer product values (>M) appear at a borderline from the FEXT period to the NEXT period.

Therefore, two consecutive outer values each for 16 borderlines from a FEXT to NEXT period are retrieved (step S201). Then, the first values of the 16 outer product values are averaged, and second values of the 16 outer product values are averaged (step S202). Although 16 borderlines are retrieved form the beginning of the hyperframe, in this example, the borderlines can be retrieved from a middle of the hyperframe. Also, the averaged sampling number is not limited to 16.

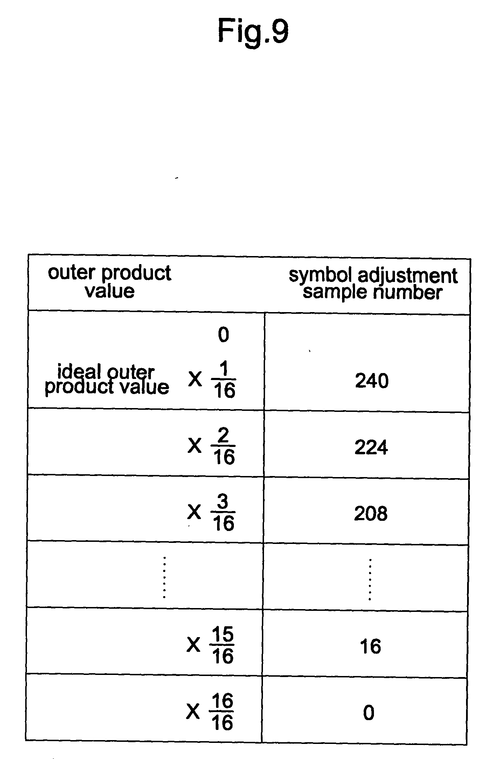

Next, the first averaged outer product values and the second averaged outer product values are added together, which is then divided into 16 in order to generate a table for 16 divisions (step S203). When the symbol breakpoint deviations are constant, the first values of the 16 outer product values should become the same, and so should the second values of the 16 outer product values in an ideal situation. However, in a real situation, factors such as communication environment changes vary the topologies, thereby varying the 16 outer product values. By averaging those values, the variation is averaged to have an imaginary ideal value. Moreover, the added value of the first averaged value and the second averaged value becomes the same as a calculated outer product value when a topology moves 90 degrees between FEXT/NEXT periods as shown in Fig. 14. When one symbol period is being sampled with a 256 sampling clock, a table with 256 samples being divided into 16 is created, corresponding the outer product values with symbol adjustment sample numbers. Fig. 9 is an example of a table for 16 divisions.

Next, it is determined where the averaged value of the first outer product values (calculated at the above step S202) belongs in a table for 16 divisions, in order to find the corresponding symbol adjustment sample number. The symbol breakpoint is adjusted by the calculated symbol adjustment sample number. Specifically, the sampling clock of AFE 27 is set forward by the symbol adjustment sample number. Or, the sampling data output from AFE 27 (e.g., one symbol, 256 samples) is buffered in order to adjust the readout position of the sampling data (step S204).

The following describes the second adjustment step. According to the symbol breakpoint established from the first adjustment step, a new breakpoint for the FFT output is given, in order to recalculate the outer product values of consecutive two symbols. By analyzing the calculated outer product values, the hyperframe synchronization is established according to the above-described procedure (step S205).

Then, two consecutive outer values each for 16 borderlines from a FEXT to NEXT period are retrieved (step S206). Then, the first values of the 16 outer product values are averaged, and so are the second values of the 16 outer product values (step S207). Next, the first averaged outer product values and the second averaged outer product values are added, in order to calculate an imaginary ideal value. By dividing the imaginary ideal value into 64, a table for 64 divisions is generated (step S208). In this case, the symbol adjustment sample number is divided into 256 x (1/64).

Further, a symbol adjustment sample number that corresponds to the averaged value of the first outer product values (of step S207) is calculated from the table for 64 divisions. The sampling clock is adjusted only to the calculated symbol adjustment sample number, in order to adjust the symbol breakpoint (step S209).

After the first adjustment step, a C-PILOT signal can be sampled again, or an FFT output of the originally received C-PILOT can be stored to be used for both the first and second adjustment steps.

Since the two consecutive outer product values are averaged to create an ideal outer product value, and a table is generated with 16 and 64 divisions, a more accurate symbol adjustment sample number is calculated, thereby improving the accuracy of the reception symbols.

In addition, the above-described procedure performs the first and the second adjustment steps; however, only the first adjustment step can be performed.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2002-160497 filed on May 31, 2002, entire content of which is expressly incorporated by reference herein.

**Claims**

1. An ADSL modem apparatus comprising:

   a retriever that retrieves a signal component of a known carrier based on an arbitrary symbol breakpoint, from a front-end of a hyperframe;
   a calculator that sequentially calculates an outer product value between a previously retrieved signal component and a currently retrieved signal component; and
   an adjuster that adjusts the symbol breakpoint according to a pattern of the outer product values.

2. The ADSL modem apparatus according to claim 1, wherein said adjuster moves timing of the symbol breakpoint in a direction to delay the symbol breakpoint when an absolute value of a first outer product value of two consecutive outer product values is smaller than an absolute value of a second outer product value of the two consecutive outer product values, and moves timing of the symbol breakpoint in a direction to accelerate the symbol breakpoint when an absolute value of a first outer product value of two consecutive outer product values is larger than an absolute value of a second outer product value of the two consecutive outer product values.

3. The ADSL modem apparatus according to claim 2, wherein said adjuster terminates a process without adjusting the symbol breakpoint, when two consecutive outer product values are added, and a ratio of a larger outer product value compared to the added value is larger than a predetermined value.

4. An ADSL modem apparatus comprising:

   a retriever that retrieves a signal component of a known carrier based on an arbitrary symbol breakpoint, from a front-end of a hyperframe;
   a calculator that sequentially calculates an outer product value between a previously retrieved signal component and a currently retrieved signal component;
   a table generator that generates a first adjustment table by dividing, by N, an added value of an added average of first outer product values within two consecutive outer product values, and of an added average of second outer product values within two consecutive outer product values, the table associating each divided area with a symbol adjustment sample number; and
   an adjuster that adjusts the symbol breakpoint by obtaining, from the first adjustment table, a symbol adjustment sample number corresponding to a calculated outer product value.

5. The ADSL modem apparatus according to claim 4, wherein, after firstly adjusting the symbol breakpoint by using the first adjustment table, outer product values between a previously retrieved signal component and a currently retrieved signal component are sequentially calculated again, then an added value combining an added average of first outer product values and an added average of second outer product values is divided by M, M being greater than N, and a second adjustment table is generated, the table associating each divided area with a symbol adjustment sample number.

6. An ADSL communication apparatus comprising:

a transceiver that executes a handshake sequence and an initialization sequence, and performs encoding of transmission data and decoding of reception data;
a host that manages an operation of said transceiver, inputs transmission data provided from a user terminal into said transceiver, receives reception data received from said transceiver via a line, and outputs the reception data to the user terminal;
an AFE unit that converts transmission data into an analog signal, the transmission data being output to the line by said transceiver, and converts an analog signal into digital data, the analog signal being received from the line;
a driver that transmits the analog signal converted by said AFE unit to the line; and
a receiver that receives the analog signal from the line,

wherein, said transceiver installs the ADSL modem apparatus according to claim 1.

7. A data communication apparatus comprising:

a transceiver that executes a handshake sequence and an initialization sequence, and performs encoding of transmission data and decoding of reception data;
a host that manages an operation of said transceiver and inputs transmission data into said transceiver;
an AFE unit that converts transmission data into an analog signal, the transmission data being output to the line by said transceiver, and converts an analog signal into digital data, the analog signal being received from the line;
a driver that transmits the analog signal converted by said AFE unit to the line; and
a receiver that receives the analog signal from the line,

wherein, said transceiver installs the ADSL modem apparatus according to claim 1.

8. A synchronization adjustment method for ADSL communication comprising:

retrieving a signal component of a known carrier based on an arbitrary symbol breakpoint, from a front-end of a hyperframe;
sequentially calculating an outer product value between a previously retrieved signal component and a currently retrieved signal component; and
adjusting the symbol breakpoint according to a pattern of the outer product values.

9. The synchronization adjustment method of an ADSL communication according to claim 8, further comprising:

moving timing of the symbol breakpoint in a direction to delay the symbol breakpoint when an absolute value of a first outer product value of two consecutive outer product values is smaller than an absolute value of a second outer product value of the two consecutive outer product values; and
moving timing of the symbol breakpoint in a direction to accelerate the symbol breakpoint when an absolute value of a first outer product value of two consecutive outer product values is larger than an absolute value of a second outer product value of the two consecutive outer product values.

10. The synchronization adjustment method of an ADSL communication according to claim 8, further comprising:

terminating a process without adjusting the symbol breakpoint, when two consecutive outer product values are added, and a ratio of a larger outer product value compared to the added value is larger than a predetermined value.

11. A synchronization adjustment method of an ADSL communication comprising:

retrieving a signal component of a known carrier based on an arbitrary symbol breakpoint, from a front-end of a hyperframe;
sequentially calculating an outer product value between a previously retrieved signal component and a currently retrieved signal component;
generating a first adjustment table by dividing, by N, an added value of an added average of first outer product values within two consecutive outer product values, and of an added average of second outer product values within two consecutive outer product values, the table associating each divided area with a symbol adjustment sample number; and
adjusting the symbol breakpoint by obtaining, from the first adjustment table, a symbol adjustment sample number corresponding to a calculated outer product value.

**12.** The synchronization adjustment method of an ADSL communication according to claim 11, further comprising:

after firstly adjusting the symbol breakpoint by using the first adjustment table, sequentially recalculating outer product values between a previously retrieved signal component and a currently retrieved signal component;
dividing, by M, an added value combining an added average of first outer product values and an added average of second outer product values, M being greater than N; and
generating a second adjustment table, the table associating each divided area with symbol adjustment sample number.

**13.** A synchronization adjustment method for ADSL communication comprising:

performing a fast Fourier transform at an ATU-R side by receiving C-PILOT1 signal transmitted from an ATU-C side, when performing communication based on ANNEX. C of ITU-T recommended G.922.1 or G.922.2;
calculating an outer product value between A48 signal of one previous symbol and current A48 signal, the calculation being performed based on a result of the fast Fourier transform; and
adjusting symbol synchronization of reception symbol from C-PILOT1 signal using the calculated outer product value.

# Fig.1

EP 1 367 793 A1

## Fig.2

34 21 22 23 24 25 26 13

| host I/F | → | Reed-Solomon encoder | → | interleave unit | → | Trellis encoder | → | tone ordering unit | → | constellation encoder | → | IFFT unit | → | DAC |

11

33 — RAM

20

processor

AFE

host I/F ↔ processor

32 31 30 29 28 27

| Reed-Solomon decoder | ← | deinterleave unit | ← | Viterbi decoder | ← | tone deordering unit | ← | constellation decoder/ FEQ unit | ← | FFT unit | ← | ADC |

EP 1 367 793 A1

# Fig.3

(a)

FEXT period → ← NEXT period

FEXT    FEXT    FEXT    NEXT    NEXT

(b) Symbol break point

① ② ③ ④ ⑤

(c) outer product value

EP 1 367 793 A1

# Fig.4

EP 1 367 793 A1

EP 1 367 793 A1

# Fig.5 (a)

# Fig.5 (b)

# Fig.6

(a)

NEXT period ——→|←—— FEXT period

| NEXT | NEXT | NEXT | FEXT | FEXT |

(b) Symbol break point

① ② ③ ④ ⑤

(c) outer product value

EP 1 367 793 A1

# Fig.7

```
                    ( start )
                        │
                        ▼
                     ┌──────┐
                     │ n=1  │────── S100
                     └──────┘
                        │
        ┌───────────────┼──────────────────────────────────┐
        │               ▼                                   │
        │    ┌────────────────────────┐                     │
        │    │ check absolde value of │────── S101          │
        │    │ nth outer product value│                     │
        │    └────────────────────────┘                     │
        │               │                                   │
   ┌─────────┐          ▼                                ┌─────────┐
   │ n ← n+1 │       ◇ |outer            NO              │ n ← n+1 │
   └─────────┘      ◇  product value| >M? ◇──────┐       └─────────┘
        │          S102        │                 │            │
      S106                     │ YES             │         S104
                               ▼                 ▼
                 NO       ◇ |(n-1)th outer  ◇   ◇ |(n-1)th outer  ◇  NO
             ┌───────────◇   product value| >M?◇   product value| >M?◇────┘
             │          S105       │                 │       S103
             │                     │ YES             │ YES
             │                     ▼                 │
             │    ┌──────────────────────────────┐   │
       S107 ─┤    │ SUM= |(n-1)th outer           │   │
             │    │       product value|          │   │
             │    │          +                    │   │
             │    │       |nth outer              │   │
             │    │        product value|         │   │
             │    └──────────────────────────────┘   │
             │                     │                  │
             │                     ▼           S108   │
             │       NO     ◇ larger |outer     ◇     │
             │    ┌────────◇ product value|           │
             │    │        ◇   >k·SUM?        ◇       │
             │    │         S109    │ YES             │
             │    ▼                 │                 │
             │  ◇ (n-1) th vechy value ◇  NO          │
             │  ◇ larger than nth outer ◇──────┐      │
             │  ◇  product value ?     ◇        │     │
             │         │ YES                    │     │
             │         ▼                        ▼     ▼
   ┌──────────────────┐  ┌──────────────────┐   ( end )
   │ shift symbol     │  │ shift symbol     │─── S111
   │ break point      │  │ break point      │
   │ at 90° right     │  │ at 90° left      │
   └──────────────────┘  └──────────────────┘
        │                      │
      S110                     │
        └──────────┬───────────┘
                   ▼
                ( end )
```

EP 1 367 793 A1

# Fig.8

```
            ┌─────────┐
            │  start  │
            └─────────┘
                 │
                 ▼
   ┌──────────────────────────────┐
   │   Hyper frame synchronization │──── S200
   │        matching process       │
   └──────────────────────────────┘
                 │
                 ▼
   ┌──────────────────────────────┐
   │ calculate outer product values│──── S201
   │ of the 1st and 2nd FEXT symbols│
   │ from beginning of Hyper frame  │
   │     to the 16th period         │
   └──────────────────────────────┘
                 │
                 ▼
   ┌──────────────────────────────┐
   │  average 16 outer product      │──── S202
   │           values               │
   └──────────────────────────────┘
                 │
                 ▼
   ┌──────────────────────────────┐
   │   create table for 16          │──── S203
   │        categories              │
   └──────────────────────────────┘
                 │
                 ▼
   ┌──────────────────────────────┐
   │   adjust symbol synchronization│──── S204
   └──────────────────────────────┘
```

first
adjustment

```
   ┌──────────────────────────────┐
   │   Hyper frame synchronization  │──── S205
   │        matching process        │
   └──────────────────────────────┘
                 │
                 ▼
   ┌──────────────────────────────┐
   │  calculate outer product values│──── S206
   │        up to 16th period       │
   └──────────────────────────────┘
                 │
                 ▼
   ┌──────────────────────────────┐
   │  average 16 outer product      │──── S207
   │           values               │
   └──────────────────────────────┘
                 │
                 ▼
   ┌──────────────────────────────┐
   │   create table for 64 divisions│──── S208
   └──────────────────────────────┘
                 │
                 ▼
   ┌──────────────────────────────┐
   │   adjust symbol synchronization│──── S209
   └──────────────────────────────┘
                 │
                 ▼
            ┌─────────┐
            │   end   │
            └─────────┘
```

second
adjustment

# Fig.9

| outer product value | | symbol adjustment sample number |
|---|---|---|
| ideal outer product value | $0$<br>$\times \frac{1}{16}$ | 240 |
| | $\times \frac{2}{16}$ | 224 |
| | $\times \frac{3}{16}$ | 208 |
| | $\vdots$ | $\vdots$ |
| | $\times \frac{15}{16}$ | 16 |
| | $\times \frac{16}{16}$ | 0 |

# Fig.10

ATU-C

| C-GALF2 (G.994.1) | C-FLAG2 (G.994.1) |
|---|---|

C-QUIET2

Beginning of Hyperframe

If R-ACK2 then C-PILOT1

If R-ACK1 then C-PILOT1A

C-QUIET3A

C-REVERB1

C-PILOT2

C-ECT

C-REVERB2

If R-ACK2 then C-PILOT3
If R-ACK1 then C-QUIET5

C-REVERB3

C-SEGUE1

C-RATES1/C-CRC1
C-MSG1/C-CRC2

C-MEDLEY

Last symbol may be shortened by n samples

Introduction of guard time

ATU-R

| R-GALF2 (G.994.1) | R-FLAG2 (G.994.1) |
|---|---|

R-QUIET2

Beginning of Hyperframe

R-REVERB1

R-QUIET3

R-ECT

R-REVERB2

R-SEGUE1

R-REVERB3

R-SEGUE2

R-RATES1/R-CRC1
R-MSG1/R-CRC2

R-MEDLEY

# Fig.11

delay in time breakpoint
of FFT input

time

1 symbol time period

# Fig.12

TTRc

| | | | | | | | | | | | |
|---|---|---|---|---|---|---|---|---|---|---|---|
| 0 | 0 | 1 | 2 | 3 | 4 | 5 | 6 | 7 | 8 | 9 | 10 |
| 1 | 11 | 12 | 13 | 14 | 15 | 16 | 17 | 18 | 19 | 20 | 21 |
| 2 | 22 | 23 | 24 | 25 | 26 | 27 | 28 | 29 | 30 | 31 | |
| 3 | 32 | 33 | 34 | 35 | 36 | 37 | 38 | 39 | 40 | 41 | 42 |
| 4 | 43 | 44 | 45 | 46 | 47 | 48 | 49 | 50 | 51 | 52 | 53 |
| 5 | 54 | 55 | 56 | 57 | 58 | 59 | 60 | 61 | 62 | 63 | 64 |
| 6 | 65 | 66 | 67 | 68 | 69 | 70 | 71 | 72 | 73 | 74 | |
| 7 | 75 | 76 | 77 | 78 | 79 | 80 | 81 | 82 | 83 | 84 | 85 |
| 8 | 86 | 87 | 88 | 89 | 90 | 91 | 92 | 93 | 94 | 95 | 96 |
| 9 | 97 | 98 | 99 | 100 | 101 | 102 | 103 | 104 | 105 | 106 | 107 |
| 10 | 108 | 109 | 110 | 111 | 112 | 113 | 114 | 115 | 116 | 117 | 118 |
| 11 | 119 | 120 | 121 | 122 | 123 | 124 | 125 | 126 | 127 | 128 | |
| 12 | 129 | 130 | 131 | 132 | 133 | 134 | 135 | 136 | 137 | 138 | 139 |
| 13 | 140 | 141 | 142 | 143 | 144 | 145 | 146 | 147 | 148 | 149 | 150 |
| 14 | 151 | 152 | 153 | 154 | 155 | 156 | 157 | 158 | 159 | 160 | 161 |
| 15 | 162 | 163 | 164 | 165 | 166 | 167 | 168 | 169 | 170 | 171 | 172 |
| 16 | 173 | 174 | 175 | 176 | 177 | 178 | 179 | 180 | 181 | 182 | |
| 17 | 183 | 184 | 185 | 186 | 187 | 188 | 189 | 190 | 191 | 192 | 193 |
| 18 | 194 | 195 | 196 | 197 | 198 | 199 | 200 | 201 | 202 | 203 | 204 |
| 19 | 205 | 206 | 207 | 208 | 209 | 210 | 211 | 212 | 213 | 214 | 215 |
| 20 | 216 | 217 | 218 | 219 | 220 | 221 | 222 | 223 | 224 | 225 | |
| 21 | 226 | 227 | 228 | 229 | 230 | 231 | 232 | 233 | 234 | 235 | 236 |
| 22 | 237 | 238 | 239 | 240 | 241 | 242 | 243 | 244 | 245 | 246 | 247 |
| 23 | 248 | 249 | 250 | 251 | 252 | 253 | 254 | 255 | 256 | 257 | 258 |
| 24 | 259 | 260 | 261 | 262 | 263 | 264 | 265 | 266 | 267 | 268 | 269 |
| 25 | 270 | 271 | 272 | 273 | 274 | 275 | 276 | 277 | 278 | 279 | |
| 26 | 280 | 281 | 282 | 283 | 284 | 285 | 286 | 287 | 288 | 289 | 290 |
| 27 | 291 | 292 | 293 | 294 | 295 | 296 | 297 | 298 | 299 | 300 | 301 |
| 28 | 302 | 303 | 304 | 305 | 306 | 307 | 308 | 309 | 310 | 311 | 312 |
| 29 | 313 | 314 | 315 | 316 | 317 | 318 | 319 | 320 | 321 | 322 | |
| 30 | 323 | 324 | 325 | 326 | 327 | 328 | 329 | 330 | 331 | 332 | 333 |
| 31 | 334 | 335 | 336 | 337 | 338 | 339 | 340 | 341 | 342 | 343 | 344 |

▨ $FEXT_R$ symbol

☐ $NEXT_R$ symbol

T1535350-00

# Fig.13 (a)

# Fig.13 (b)

Pilot Tone and A48 signal

Pilot Tone

90°

A48 signal

Sender side during FEXT period

Sender side during NEXT period

# Fig.14 (a)

Pilot Tone

90°

A48 signal

receiver side during FEXT period

# Fig.14 (b)

Pilot Tone

A48 signal

receiver side during NEXT period

**European Patent Office**

## EUROPEAN SEARCH REPORT

Application Number

EP 03 01 2541

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/008525 A1 (SEAGRAVES ET AL) 24 January 2002 (2002-01-24) * abstract * * paragraph [0013] - paragraph [0014] * * paragraph [0050] - paragraph [0056] * * paragraph [0060] - paragraph [0091] * --- | 1-13 | H04L27/26 H04L7/04 H04M11/06 |
| A | US 6 279 022 B1 (MIAO ET AL) 21 August 2001 (2001-08-21) * abstract * * column 5, line 4 - line 53 * --- | 1-13 | |
| A | US 2001/024454 A1 (HASEGAWA KAZUTOMO ET AL) 27 September 2001 (2001-09-27) * paragraph [0053] - paragraph [0074] * ----- | 1-13 | |
| | | | TECHNICAL FIELDS SEARCHED (Int.Cl.7) |
| | | | H04L H04M |

The present search report has been drawn up for all claims

| Place of search | Date of completion of the search | Examiner |
|---|---|---|
| MUNICH | 15 July 2003 | Catley, I |

EP 1 367 793 A1

## ANNEX TO THE EUROPEAN SEARCH REPORT
## ON EUROPEAN PATENT APPLICATION NO.

EP 03 01 2541

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2003

| Patent document cited in search report | | Publication date | Patent family member(s) | | Publication date |
|---|---|---|---|---|---|
| US 2002008525 | A1 | 24-01-2002 | JP | 2001285383 A | 12-10-2001 |
| US 6279022 | B1 | 21-08-2001 | NONE | | |
| US 2001024454 | A1 | 27-09-2001 | JP | 2001268064 A | 28-09-2001 |

EPO FORM P0459

For more details about this annex : see Official Journal of the European Patent Office, No. 12/82

25